(19) **Europäisches Patentamt**

**European Patent Office**

**Office européen des brevets**

(11) Veröffentlichungsnummer: **0 314 932**
**A2**

(12) **EUROPÄISCHE PATENTANMELDUNG**

(21) Anmeldenummer: **88116548.4**

(22) Anmeldetag: **06.10.88**

(51) Int. Cl.⁴: **B60T 15/24**

(30) Priorität: **06.11.87 DE 3737654**

(43) Veröffentlichungstag der Anmeldung:
**10.05.89 Patentblatt 89/19**

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Siebold, Manfred**
**Amsterdamer Strasse 6**
**D-7030 Böblingen(DE)**

(54) **Anhänger-Steuerventil.**

(57) Es wird für ein Anhänger-Steuerventil eine Verstelleinrichtung für die Voreilung einer Anhängerbremse gegenüber einer Zugwagenbremse vorgeschlagen.

Die Verstellung der Voreilung wird durch eine Lageänderung des Einlaßsitzes (12) eines Doppelsitzventiles (8/9/12) erreicht. Die Lage-Verstelleinrichtung hat als Verstellglied eine Hohlschraube (28), die von unten in das Steuerventil-Gehäuse (1) eingesetzt ist. Die Hohlschraube (28) bildet gleichzeitig einen Teil eines einzigen Weges der Abluft zur Außenluft dar.

Das Anhänger-Steuerventil ist für Druckluftbremsanlagen von Nutzfahrzeugen bestimmt.

**EP 0 314 932 A2**

## Anhänger-Steuerventil

### Stand der Technik

Die Erfindung geht aus von einem Anhänger-Steuerventil nach der Gattung des Hauptanspruchs. Ein derartiges Anhänger-Steuerventil ist bekannt (Marelli-Druckschrift AC 595 vom Juli 1983).

Dem bekannten Anhänger-Steuerventil liegt das Problem zugrunde, daß die Anhängerbremse gegenüber der Zugwagenbremse voreilen muß, damit der Wagenzug beim Bremsen gestreckt bleibt. Da jeder einzelne Wagenzugtyp eine andere Voreilung seiner Anhängerbremse braucht, ist es vorteilhaft, im Anhänger-Steuerventil Verstellmittel vorzusehen, mit denen die Voreilung der Anhängerbremse veränderbar ist.

Bei der bekannten Bauart wird die Voreilung der Bremse des Anhängers durch eine Lageveränderung des Einlaßventilsitzes im Gehäuse des Anhänger-Steuerventils erreicht. Dazu ist in das Gehäuse von unten eine Schraube eingesetzt, die gegen einen vollzylindrischen Axialansatz des Einlaßventilsitzes drückt und mit der bei ihrer Verdrehung die Höhenlage des Einlaßventilsitzes im Gehäuse des Anhänger-Steuerventils verändert werden kann.

Dieses bekannte Anhänger-Steuerventil hat jedoch den Nachteil, daß es eine seitliche Entlüftung hat, und daß die Querschnitte vom Auslaßventilsitz nicht optimal gestaltet werden können. Außerdem wäre eine nachträgliche Ausrüstung mit einem Schalldämpfer umständlich und teuer.

### Vorteile der Erfindung

Das eingangs genannte Anhänger-Steuerventil mit den kennzeichnenden Merkmalen des Hauptanspruchs hat demgegenüber den Vorteil, daß ein ohnehin für den Anbau der Schraubverstellung benötigtes Gehäuse-Anschlußauge eine Hohlschraube als Verstellglied aufnehmen kann und der Stellkolben-Rohransatz mit der Hohlschraube einen Weg zur Außenluft im Anschlußauge darstellen.

### Zeichnung

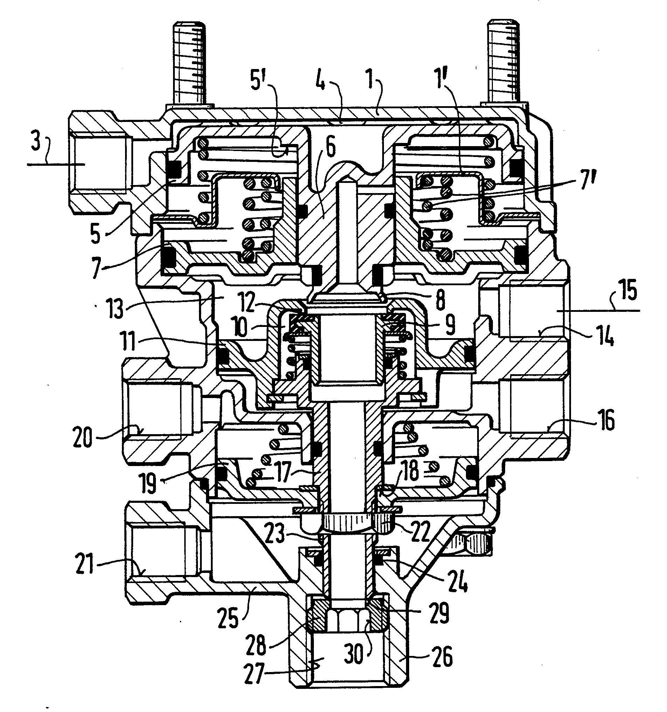

Ein Ausführungsbeispiel der Erfindung ist in der Zeichnung dargestellt und in der nachfolgenden Beschreibung näher erläutert.

### Beschreibung des Ausführungsbeispieles

Ein Anhänger-Steuerventil hat ein weitgehend hohlzylindrisches Gehäuse 1 mit einem seitlichen Auge für den Anschluß einer Steuerleitung 3, über die Bremsdruck von einem nicht dargestellten Bremsventil in eine Arbeitskammer 4 gelangt (Bremskreis I), die eine bewegliche, von einem Steuerkolben 5 gebildete Wand aufweist.

Der Kolben 5 und eine Schulter 5' trägen einen zylindrischen Ansatz 6, der einen Rückwirkkolben 7 durchdringt, der über Federn 7' an einer aus Blech bestehenden Gehäusewand 1' abgestützt ist. Der Ansatz 6 ist an seinem Ende mit einem Ventilsitz 8 für ein Auslaßventil 8/9 versehen. Ein Schließkörper 9 für das Auslaßventil 8/9 ist in eine Höhlung 10 eines Stellkolbens 11 eingesetzt, der einen Ventilsitz 12 für ein Einlaßventil 9/12 trägt. Auf diese Weise ist hier ein an sich bekanntes Doppelsitzventil 8/9/12 geschaffen.

Der Auslaßventilsitz 8 ragt in eine Druckwechselkammer 13 hinein, an die über einen Anschluß 14 eine Anhänger-Bremsleitung 15 angeschlossen ist. Die Druckwechselkammer 13 wird auf ihrer dem Rückwirkkolben 7 gegenüberliegenden Seite von dem Stellkolben 11 begrenzt. In der den Schließkörper 9 aufnehmenden Höhlung 10 herrscht Vorratsdruck, der über einen Gehäuse-Anschluß 16 herangeführt wird.

Der Stellkolben 11 mit seinem Einlaßventilsitz 12 trägt einen Rohransatz 17, der eine äußere Schulter 18 aufweist, die einem Arbeitskolben 19 für die sogenannte "dritte Bremse" als Anlage dient. Dieser Arbeitskolben 19 unterliegt von oben über einen Anschluß 20 einem Druck, der in nicht dargestellten Federspeicherbremszylindern herrscht. Von unten wirkt auf ihn ein Druck in einem Bremskreis II ein, der über einen Anschluß 21 herangeführt wird. Gegen die Schulter 18 wird er von einer Ringmutter 22 gespannt, die auf einem an dem Rohransatz 17 angebrachten Außengewinde 23 verschraubbar ist.

Der Rohransatz 17 ragt - mittels einer Ringdichtung 24 abgedichtet - durch einen unten an das Gehäuse 1 angesetzten Gehäuse-Boden 25 hindurch. Dieser Gehäuse-Boden 25 trägt in einem Anschlußauge 26 ein Innengewinde 27, in das eine Hohlschraube 28 eingesetzt ist. Die Hohlschraube 28 liegt mit ihrer inneren Stirnfläche an einer Endfläche 29 des Rohransatzes 17 an und bildet - bei ihrer Verdrehung - eine Lage-Verstelleinrichtung für den Rohransatz 17 und damit für den Einlaßventilsitz 12. Zur Betätigung der Hohlschraube 28 ist diese mit einer innenliegenden Betätigungs-Schlüsselfläche 30 in Form eines Innensechskantes versehen.

Es ist zu erkennen, daß die Höhlung des Rohransatzes 17 und die Höhlung der Hohlschraube 28 eine Außenluftverbindung darstellen vom Doppelsitzventil 8/19/12 zum Anschlußauge 26.

Wirkungsweise

Das Doppelsitzventil 8/9/12 im Anhänger-Steuerventil kann auf drei verschiedene Weisen umgeschaltet werden.

Erstens: Durch Druckanstieg in der Arbeitskammer 4 (Bremskreis I). Der Auslaßventilsitz 8 bewegt sich nach unten, schließt die Außenluftverbindung der Druckwechselkammer 13 hebt den Schließkörper 9 von seinem Einlaßventilsitz 12 ab und läßt Vorratsluft in die Druckwechselkammer 13 und von dort in die Bremsleitung 15 gelangen. Dabei bestimmt die Höhenlage des Einlaßventilsitzes 12 die Voreilung der Anhängerbremse, weil der Rückwirkkolben 7 früher oder später zur Anlage an die Schulter 5' des Kolbens 5 kommt und damit die Kraft der Federn 7' - maßgebend für die Höhe der Voreilung - unterschiedlich ist.

Zweitens: Durch Druckanstieg am Anschluß 21 (Bremskreis II). Der Rohransatz 17 und der Stellkolben 11 bewegen sich nach oben und das Doppelsitzventil 8/9/12 wird umgeschaltet.

Drittens: Durch Druckabsenkung am Anschluß 20. Bei Betätiung der Feststellbremse wird die Kammer über dem Arbeitskolben 19 entlüftet. Der Stellkolben 11 bewegt sich geradeso nach oben wie vorher beschrieben.

Bei jedem Zurückschalten des Doppelsitzventils 8/9/12 wird die Druckwechselkammer 13 über die einzige Entlüftung bei 26 entlüftet.

Zum Einstellen der Voreilung wird mit einem Außensechskant-Schlüssel in die Hohlschraube 28 eingegriffen. Die Hohlschraube 28 wird verdreht, wobei sie sich axial verstellt. Dieser Verstellung folgt der Rohransatz 17 und mit diesem der Einlaßventilsitz 12. Die Höhenlage des Einlaßventilsitzes 12 im Ventil-Gehäuse 1 bestimmt die Voreilung der Anhängerbremse.

## Ansprüche

1. Anhänger-Steuerventil mit mindestens einem bremsdruckbetätigten, einen Auslaßventilsitz des Steuerventils aufweisenden Steuerkolben, ferner mit einem einem Einlaßventilsitz des Steuerventils tragenden und den Ventilschließkörper für Ein- und Auslaßventilsitz aufnehmenden Stellkolben und mit einer Verstelleinrichtung für die die Voreilung des Anhänger-Steuerventils bestimmende Lage des Einlaßventilsitzes im Steuerventil-Gehäuse, dadurch gekennzeichnet, daß die Lage-Verstelleinrichtung als Verstellglied eine Hohlschraube (28) aufweist, die von unten in das Steuerventil-Gehäuse (1) eingesetzt ist und die als von einem Stellkolben-Rohransatz (17) getrenntes Teil angeordnet ist.

2. Anhänger-Steuerventil nach Anspruch 1, dadurch gekennzeichnet, daß der mit dem Einlaß-Ventilsitz (12) versehene Stellkolben (11) einen Rohransatz (17) trägt, der abgedichtet durch einen unten an das Gehäuse (1) angesetzten Boden (25) hindurchreicht, daß ferner die Hohlschraube (28) eine innenliegende Betätigungs-Schlüsselfläche (30) aufweist und daß die Höhlung des Rohransatzes (17) und die der Hohlschraube (28) eine Außenluftverbindung für das Anhänger-Steuerventil bilden.

3. Anhänger-Steuerventil nach Anspruch 2, dadurch gekennzeichnet, daß der Rohransatz (17) eine äußere Schulter (18) trägt und daß die Schulter (18) einem Arbeitskolben (19) für die dritte Bremse als Anlage dient, gegen die er mittels eines Spannelementes (Ringmutter 22) festgespannt ist.

4. Anhänger-Steuerventil nach Anspruch 3, dadurch gekennzeichnet, daß der Rohransatz (17) ein an die Schulter (18) anschließendes Außengewinde (23) trägt und daß das Spannelement eine auf dem Außengewinde verschraubte Ringmutter (22) ist.